# EUROPÄISCHE PATENTSCHRIFT

(11) **EP 2 047 931 B1**
(45) Veröffentlichungstag und Bekanntmachung des Hinweises auf die Patenterteilung: **19.01.2011**
(21) Anmeldenummer: 08405184.6
(22) Anmeldetag: 22.07.2008
(51) Int. Cl.: B23B 31/00, B23Q 11/00

(54) **Kühlmittelzuführung**
Coolant supply
Alimentation en liquide de refroidissement

(30) Priorität: 13.08.2007 CH 12762007
(43) Veröffentlichungstag der Anmeldung: 15.04.2009
(73) Patentinhaber: Rego-Fix AG, 4456 Tenniken (CH)
(72) Erfinder: Brönnimann, Martin, 4452 Itingen (CH)
(74) Vertreter: Braun, André jr.

(56) Entgegenhaltungen:
- EP-A- 0 924 012
- WO-A-84/03649
- DE-A1- 19 832 793
- JP-A- 8 099 245
- US-A- 5 567 093

## Beschreibung

Die Erfindung betrifft eine Vorrichtung zur Zuführung einer Kühlflüssigkeit zur Aussenfläche eines mittels einer Spannmutter in einem Werkzeughalter einer Werkzeugmaschine eingespannten Werkzeuges.

Werkzeugmaschinen der spanenden Fertigung sind in der Regel mit Kühlschmiereinrichtungen ausgestattet. Diese fördern eine Kühlflüssigkeit in den Arbeitsbereich des Werkzeugs. Dies erfolgt entweder über Spritzdüsen, die möglichst nah am Arbeitsbereich des Werkzeugs angeordnet sind, oder über eine Kühlmittelzuführung durch die Spindel der Werkzeugmaschine. Wenn das Kühlmittel durch die Maschinenspindel zugeführt wird, gelangt es entweder durch einen Kanal im Werkzeug zu dessen Arbeitsbereich oder entlang seiner Aussenfläche. Die vorliegende Erfindung betrifft diese letztere Lösung, bei der die Kühlflüssigkeit vom Inneren der Spindel durch den Werkzeughalter zum Werkzeugschaft geführt wird und von dort entlang der Aussenfläche des Werkzeugs zum Arbeitsbereich gelangt.

Die Zuführung einer Kühlflüssigkeit durch die Maschinenspindel und den Werkzeughalter zur Aussenseite des Werkzeugs ist bekannt und beispielsweise in WO 84/03649 oder in DE-A-19832793 beschrieben.

In der Praxis hat sich gezeigt, dass die Kühlmittelzuführung über die Aussenfläche eines Werkzeugs vor allem bei hohen Drehzahlen nicht optimal erfolgt. Der Erfindung liegt deshalb die Aufgabe zugrunde, die Kühlmittelzuführung über die Aussenseite des Werkzeugs zu verbessern.

Erfindungsgemäss wird dies durch eine Vorrichtung gemäß Anspruch 1 erreicht.

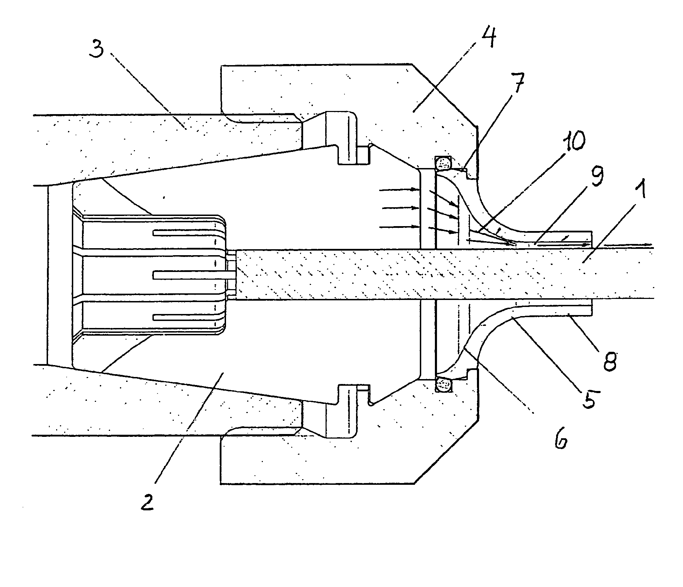

Im folgenden wird anhand der beiliegenden Zeichnung ein bevorzugtes Ausführungsbeispiel der Erfindung beschrieben. Die Zeichnung zeigt eine Schnittdarstellung einer typischen Werkzeugaufnahme mit eingesetztem Werkzeug.

Ein Werkzeugschaft 1 ist wie üblich in die Bohrung einer Spannzange 2 eingespannt, die im Aufnahmekonus einer Maschinenspindel 3 sitzt und ihrerseits mittels einer auf die Spindel aufgeschraubten Spannmutter 4 im Aufnahmekonus eingespannt ist. Die Spannmutter 4 entspricht der bekannten Spannmutter mit einsetzbaren Dichtscheiben. In die werkzeugseitige Stirnseite der Spannmutter ist ein Führungselement 5 eingesetzt. Das Führungselement besteht aus einem nach aussen gerichteten und den Werkzeugschaft umgebenden Führungsrohr 8, welches maschinenseitig eine trichterförmige Aufweitung 6 mit einem in die Öffnung der Spannmutter passenden äusseren Rand 7 aufweist. Der Innendurchmesser des Führungsrohrs ist grösser als der Durchmesser des Werkzeugschafts, so dass zwischen dem Schaft und dem Rohr ein Ringspalt 9 offen bleibt.

Durch eine Verdichtung des Kühlmittelstroms 10 im trichterförmigen Bereich des Führungselements 5 und die anschliesende Führung in dem durch den Ringspalt 9 gebildeten Kanal wird ein laminarer Kühlmittelstrom entlang dem Werkzeugschaft erreicht. Die axiale Länge des Kanals beträgt beim vorliegenden Ausführungsbeispiel abhängig vom Durchmesser des Werkzeugschafts 6 - 12 mm. Um einen sauberen Abriss des laminaren Kühlmittelstroms vom Führungsrohr zu gewährleisten darf die Innenkante des werkzeugseitigen Endes des Führungsrohrs keine Fase oder Rundung aufweisen.

Gemäss einer anderen Ausführungsform der Erfindung wird anstelle einer üblichen Spannmutter, in welche das Führungselement anstelle einer Dichtscheibe eingesetzt wird, das Führungselement einstückig an der Spannmutter angeformt.

Die optimalen Abmessungen des Führungselements hängen von mehreren Faktoren ab und sind so an den Einzelfall anzupassen, dass der Kühlmittelstrom möglichst laminar aus dem Führungsrohr austritt. Gute Ergebnisse wurden z.B. für Werkzeugschäfte mit Durchmessern von 1 - 20 mm mit einem Ringspalt von weniger als 1 mm, vorzugsweise ca. 0,4 mm Weite und einer axialen Länge des Ringspalts von 6 - 12 mm erzielt. Geringfügig abweichende Dimensionen ergeben ebenfalls noch gute Ergebnisse.

## Patentansprüche

1. Vorrichtung zur Zuführung einer Kühlflüssigkeit zur Aussenfläche eines mittels einer Spannmutter (4) in einem Werkzeughalter einer Werkzeugmaschine eingespannten Werkzeugschafts (1), **dadurch gekennzeichnet, dass** die Spannmutter mit einem sich von ihr in werkzeugseitiger Richtung erstreckenden Führungselement (5) versehen ist, welches aus einem den Werkzeugschaft (1) in einem einen Ringspalt (9) definierenden Abstand umgebenden Führungsrohr (8) und einer maschinenseitig an das Führungsrohr anschliessenden trichterförmigen Aufweitung (6) besteht und dass der maschinenseitige äussere Rand (7) der Aufweitung mit der Spannmutter verbunden ist.

2. Vorrichtung nach Anspruch 1, **dadurch gekennzeichnet, dass** die Spannmutter (4) mit dem Führungselement (5) einstückig verbunden ist.

3. Vorrichtung nach Anspruch 1, **dadurch gekennzeichnet, dass** die axiale Länge des Ringspalts um mindestens den Faktor 6 grösser ist als dessen Weite.

4. Vorrichtung nach Anspruch 3, **dadurch gekennzeichnet, dass** die axiale Länge des Ringspalts um mindestens den Faktor 15 grösser ist als dessen Weite.

## Claims

1. A device for supplying a coolant to the outer surface of a tool shank (1) which is clamped by means of a clamping nut (4) in a tool holder of a machine tool, **characterized in that** the clamping nut is provided with a guide element (5) which extends from the guide element towards the tool side and which consists of a guide tube (8) which surrounds the tool shank (1) at a distance which defines an annular gap (9) and of a funnel-shaped widening (6) adjoining the guide tube on the machine side, and that the outer rim (7) of the widening is connected on the machine side to the clamping nut.

2. The device according to claim 1, **characterized in that** the clamping nut (4) is integrally connected to the guide element (5).

3. The device according to claim 1, **characterized in that** the axial length of the annular gap is greater by at least a factor of 6 than its width.

4. The device according to claim 3, **characterized in that** the axial length of the annular gap is greater by at least a factor of 15 than its width.

## Revendications

1. Dispositif pour amener un liquide de refroidissement à la surface extérieure d'une tige d'outil (1) serrée au moyen d'un écrou de serrage (4) dans un porte-outil d'une machine-outil, **caractérisé en ce que** l'écrou de serrage est doté d'un élément de guidage (5) s'étendant depuis l'écrou dans le sens côté outil, lequel élément de guidage est constitué par un tube de guidage (8) entourant la tige d'outil (1) à une distance définissant une fente annulaire (9) et par un élargissement (6) en forme d'entonnoir se raccordant côté machine au tube de guidage et **en ce que** le bord (7) extérieur côté machine de l'élargissement est relié à l'écrou de serrage.

2. Dispositif selon la revendication 1, **caractérisé en ce que** l'écrou de serrage (4) est relié d'un seul tenant à l'élément de guidage (5).

3. Dispositif selon la revendication 1, **caractérisé en** en ce que la longueur axiale de la fente annulaire est supérieure d'au moins un facteur 6 à sa largeur.

4. Dispositif selon la revendication 3, **caractérisé en ce que** la longueur axiale de la fente annulaire est supérieure d'au moins un facteur 15 à sa largeur.
